(19) Europäisches Patentamt
European Patent Office
Office européen des brevets

(11) Numéro de publication: **0 091 152**
**B1**

(12) # FASCICULE DE BREVET EUROPEEN

(45) Date de publication du fascicule du brevet: **19.02.86**

(51) Int. Cl.[4]: **C 08 K 5/13**, C 08 K 5/36, C 08 L 23/02

(21) Numéro de dépôt: **83200411.3**

(22) Date de dépôt: **24.03.83**

(54) **Compositions stabilisées à base de polymères d'alpha-oléfines.**

(30) Priorité: **05.04.82 FR 8206014**

(43) Date de publication de la demande:
**12.10.83 Bulletin 83/41**

(45) Mention de la délivrance du brevet:
**19.02.86 Bulletin 86/8**

(84) Etats contractants désignés:
**AT BE CH DE FR GB IT LI LU NL SE**

(56) Documents cités:
**FR - A - 1 321 450**
**FR - A - 1 414 361**
**US - A - 3 030 333**

(73) Titulaire: **SOLVAY & Cie (Société Anonyme), Rue du Prince Albert, 33, B-1050 Bruxelles (BE)**

(72) Inventeur: **Ruelle, Jean-Jacques, Rue de la Vanne 6, B-5905 St. Remy Geest (BE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



ACTORUM AG

## Description

La présente invention concerne des compositions stabilisées à base de polymères d'alpha-oléfines. Elle concerne plus particulièrement des compositions à base de polymères de l'éthylène stabilisées à la dégradation oxydante par un antioxydant primaire phénolique.

On sait que toutes les polyoléfines présentent l'inconvénient de se dégrader par suite de phénomènes d'oxydation qui sont accélérés sous l'effet de divers facteurs et plus particulièrement au cours des traitements thermiques qu'implique leur mise en oeuvre. Cette dégradation entraîne un accroissement de la coloration et une diminution des propriétés mécaniques des objets façonnés à partir de ces polyoléfines.

Pour pallier cet inconvénient, on incorpore au polymère des stabilisants appelés antioxydants primaires, qui sont le plus souvent des antioxydants phénoliques choisis parmi les mono-, bis- et thiobisphénols alkylés, qui s'opposent efficacement à la dégradation thermique du polymère lors de sa mise en oeuvre.

Ces antioxydants primaires présentent toutefois souvent l'inconvénient d'être trop volatils et de s'éliminer rapidement du polymère par évaporation lors de la fabrication d'objets façonnés à partir des compositions stabilisées. C'est pourquoi il est devenu conventionnel de mettre en oeuvre conjointement au moins un antioxydant secondaire qui n'est pas éliminable par évaporation et qui assure la stabilisation du polymère vis-à-vis de la dégradation oxydante à long terme.

Des antioxydants secondaires conventionnels, qui agissent souvent de façon synergétique avec les antioxydants primaires, sont, par exemple, des thioesters, le plus souvent des dérivés de l'acide thiodipropionique, et des phosphites organiques, le plus souvent des phosphites aromatiques.

Un autre inconvénient fréquent des antioxydants primaires phénoliques, et plus particulièrement des bisphénols, réside dans les colorations indésirables qu'ils confèrent aux polyoléfines. Ce problème, auquel aucune solution tout à fait satisfaisante n'a été trouvée jusqu'à présent, a notamment pour cause la formation de complexes colorés entre ces antioxydants et les dérivés métalliques provenant des catalyseurs utilisés pour la polymérisation et subsistant à titre de résidus dans le polymère et l'interaction de ces antioxydants avec d'autres additifs conventionnels des polyoléfines tels que les agents antistatiques.

La présente invention vise à procurer de nouvelles compositions stabilisées à base de polymères d'alpha-oléfines qui contiennent un antioxydant primaire phénolique et qui, néanmoins, ne présentent plus l'inconvénient sus-mentionné.

L'invention concerne à cet effet des compositions stabilisées à la dégradation oxydante à base de polymères d'alpha-oléfines contenant un antioxydant primaire phénolique appartenant au groupe des mono-, bis- et thiobisphénols alkylés et qui comprennent en outre un antioxydant secondaire choisi parmi les polymères phénoliques.

L'antioxydant primaire phénolique utilisé dans les compositions selon l'invention appartient au groupe des mono-, bis- et thiobisphénols alkylés. A titre d'exemples de monophénols alkylés, on peut citer le 2,6-di-tert-butyl-p-crésol et le (3'5'-di-tert-butyl-4--hydroxyphényl) propionate de n-octadécyle. A titre d'exemples de bisphénols alkylés, on peut citer le 2,2'méthylène-bis(4-méthyl-6-tert-butylphénol) et le di-(2,6-di-tert-butyl-4-méthylphényl) pentaérythritol. A titre d'exemples de thiobisphénols alkylés, on peut citer le 4,4'-thiobis-6-tert-butyl-m-crésol, le 4,4'-thiobis-6-tert-butyl-o-crésol et le thiodiéthylène bis-(3,5-di-tert-butyl-4-hydroxy)hydrocinnamate. Parmi les antioxydants phénoliques énumérés ci-dessus, les bisphénols alkylés sont préférés et, parmi ces derniers, particulièrement le 2,2'-méthylène-bis-(4-méthyl-6-tert-butylphénol) qui combine une volatilité non excessive avec de bonnes propriétés stabilisantes dans la mise en oeuvre du polymère. Ce dernier est aussi toutefois l'antioxydant primaire phénolique qui, utilisé seul, confère aux polyoléfines le degré de coloration le plus élevé. Bien entendu, l'utilisation de plusieurs antioxydants phénoliques primaires différents entre également dans le cadre de l'invention.

L'antioxydant secondaire utilisé dans les compositions selon l'invention est choisi parmi les polyesters phénoliques. Par polyesters phénoliques, on entend désigner les composés dérivés d'un acide carboxylique aliphatique ou aromatique polyfonctionnel et d'un polyphénol alkylé. L'acide carboxylique polyfonctionnel est de préférence un acide dicarboxylique aromatique tel que l'acide téréphtalique. Le phénol alkylé est de préférence un bisphénol alkylé. Le téréphtalate de 2,2'-méthylène-bis(4-méthyl-6-tert--butylphénol) est tout particulièrement préféré. Il est obtenu généralement par réaction du dichlorure de l'acide téréphtalique avec un excès de 2,2'-méthylène-bis(4-méthyl-6-tert-butylphénol).

Selon une variante préférée de l'invention, les compositions stabilisées selon l'invention comprennent en outre un antioxydant tertiaire choisi parmi les thioesters et les phosphites organiques. Des thioesters utilisables sont, d'une part, les esters aliphatiques de l'acide thiodipropionique et, d'autre part, les esters dérivés de polyols aliphatiques et d'acides alkylthiopropioniques. A titre d'exemples d'esters aliphatiques de l'acide thiodipropionique, on peut citer les dilauryl-, distéaryl-, et dimyristyl-thiodipropionates. A titre d'exemples d'esters dérivés de polyols aliphatiques et d'acides alkylthiodipropioniques, on peut citer l'octaméthylène-bis(3-dodécylthiopropionate), le sulfure de bis(éthylène-3-octadécylthiopropionate), et le tétrakis(3-thiododécylpropionate) de pentaérythritol.

Des phosphites organiques utilisables à titre d'antioxydants tertiaires sont, d'une part, les trialkyl- et les trialkylarylphosphites et, d'autre part, les diphosphites cycliques dérivés du pentaérythritol. A titre d'exemples de trialkyl- et trialkylarylphosphites, on peut citer les trinonyl-, tri(nonylphényl)- et tri-[(2,4-di-tert-butyl-5-méthyl)phényl]-phosphites. A titre d'exemple de diphosphites cycliques dérivés du pentaérythritol, on peut citer le diphosphite de distéarylpentaérythritol.

Parmi tous les antioxydants tertiaires énumérés ci-dessus, les esters dérivés de polyols aliphatiques et d'acides alkylthiodipropioniques sont préférés et, parmi eux, plus particulièrement le tétrakis(3-thiododécylpropionate) de pentaérythritol.

Selon une autre variante préférée de l'invention, les compositions stabilisées selon l'invention comprennent, outre les antioxydants définis plus haut, un composé stabilisant qui est un sel de calcium d'un acide aliphatique monocarboxylique saturé. A titre d'exemples de pareils sels, on peut citer les stéarate, palmitate, et 2-éthylhexanoate. Le sel préféré est le stéarate de calcium parce qu'il contribue le plus efficacement à s'opposer à la naissance de colorations dans les compositions stabilisées selon l'invention.

Les antioxydants primaire, secondaire et tertiaire, ainsi que l'éventuel composé stabilisant sont utilisés aux doses stabilisantes usuelles. Ces doses sont habituellement comprises entre 0,001 et 10% en poids des polymères d'alpha-oléfines entrant dans la composition et de préférence entre 0,005 et 5% et plus particulièrement, entre 0,01 et 0,5%.

Les polymères d'alpha-oléfines entrant dans les compositions selon l'invention sont des polymères contenant au moins 50% molaires et de préférence au moins 75% molaires d'oléfines à insaturation terminale dont la molécule contient de 2 à 18 et de préférence de 2 à 6 atomes de carbone telles que l'éthylène, le propylène, le butène-1, le pentène-1, les méthylbutènes-1, l'hexène-1, les 3- et 4-méthylpentènes-1 et le vinylcyclohexène. De préférence, il s'agit d'homopolymères de pareilles alpha-oléfines ou de copolymères de ces alpha-oléfines entre elles ou avec des dioléfines comprenant de 4 à 18 atomes de carbone, telles que des dioléfines aliphatiques non conjuguées comme l'hexadiène-1,4 par exemple ou telles que des dioléfines alicycliques ayant un pont endocyclique comme le dicyclopentadiène par exemple. Les meilleurs résultats sont obtenus avec les polymères de cette nature contenant au moins 90% molaires et de préférence au moins 95% molaires d'éthylène.

Les compositions stabilisées selon l'invention peuvent aussi être à base de mélanges de deux ou plusieurs polymères tels que décrits ci-dessus.

Les polymères utilisables peuvent être préparés selon les méthodes connues de polymérisation des alpha-oléfines et notamment par les procédés à basse pression. En particulier, les polymères de l'éthylène peuvent être préparés en présence de systèmes catalytiques superactifs à base de composés organométalliques et de constituants résultant de la réaction chimique de composés du magnésium avec des composés du titane. Grâce à ces systèmes catalytiques superactifs, les polymères obtenus contiennent en général moins de 100 ppm (parties par million), et souvent même moins de 50 ppm de titane, sous forme de dérivés provenant de ces constituants, sans avoir dû subir un traitement spécial d'épuration à l'issue de la polymérisation.

Outre le polymère, les antioxydants primaire, secondaire et éventuellement tertiaire ainsi que l'éventuel composé stabilisant, les compositions stabilisées selon l'invention peuvent contenir d'autres additifs usuels tels que, par exemple, d'autres antioxydants tels que les tétrakisphénols, les amines, d'autres polymères, des agents renforçants, des pigments, lubrifiants, charges, agents antistatiques, etc.

Les antioxydants primaire et secondaire, ainsi que les autres additifs, peuvent être incorporés au polymère de toute façon connue en soi, par exemple en imprégnant le polymère en poudre ou en granules au moyen d'une solution des antioxydants, ou encore en mélangeant une solution ou une suspension du polymère avec une solution des antioxydants. L'incorporation peut être réalisée par exemple, soit dans un mélangeur ou un broyeur où le solvant est évaporé, soit par malaxage sur des cylindres chauffés ou par extrusion d'un mélange du polymère et de la composition stabilisante.

Les compositions stabilisées selon l'invention sont aptes à la mise en oeuvre par tous les procédés classiques de transformation des matières plastiques, et plus particulièrement par extrusion. Ces compositions conviennent pour la fabrication de feuilles, de films, de bandelettes, de fibres et filaments, de pièces injectées et de corps creux et plus particulièrement de tubes et tuyaux.

Outre leur excellente résistance au jaunissement, les compositions stabilisées selon l'invention présentent une excellente résistance à la dégradation oxydante à long terme permettant de conférer et de conserver aux objets façonnés à partir d'elles une excellente résistance au fendillement sous tension.

L'invention est illustrée par l'exemple ci-après.

*Exemple*

On prépare une composition stabilisée par mélange à sec des constituants suivants:

— 100 parties en poids d'un polymère de l'éthylène commercialisé par la société anonyme SOLVAY & Cie sous la dénomination ELTEX B 4002 P;

— 0,01 partie en poids de 2,2'méthylène bis(4--méthyl-6-tert-butylphénol)

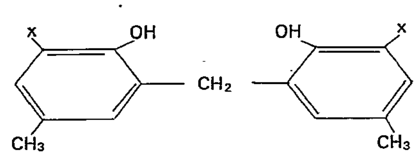

commercialisé par la Société Française d'Organosynthèse sous la dénomination MBP 5;

— 0,02 partie en poids de téréphtalate de 2,2'--méthylène bis(-4-méthyl-6 tert.butylphénol)

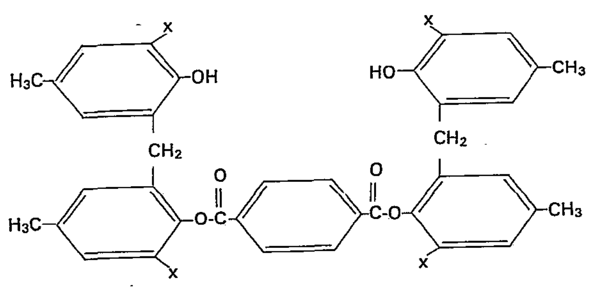

commercialisé par la Société Française d'Organosynthèse sous la dénomination HPM 12;

— 0,03 partie en poids de tétrakis(3-thio-dodécylpropionate) de pentaérythritol

$(H_{25}C_{12}\text{-}S\text{-}CH_2\text{-}CH_2\text{-}COO\text{-}CH_2\text{-})_4C$

commercialisé par la firme Shipro Kasei Kaisha sous la dénomination SEENOX 412 S;

— 0,2 partie en poids de stéarate de calcium.

Cette composition (appelée ci-après composition 1) est granulée à 220°C dans une extrudeuse monovis sous protection d'azote.

Pour apprécier la mesure dans laquelle la composition 1 s'est colorée (jaunissement) à la suite de sa granulation, on a soumis les granules de cette composition à une mesure de leur indice de jaune (selon la norme ASTM D 1925-70T).

Les résultats de ces mesures figurent dans le Tableau ci-dessous qui rassemble en outre, à titre de comparaison, les résultats des mesures

— de l'indice de jaune du polymère exempt d'additifs (non granulé);

— de l'indice de jaune du polymère additionné seulement de 0,01% en poids du produit MBP 5 (composition 2R);

— de l'indice de jaune du polymère additionné de 0,01% en poids du produit MBP 5, de 0,03% en poids du produit SEENOX 412 S et de 0,2% en poids de stéarate de calcium (composition 3R).

*Tableau*

| Composition | Polymère exempt d'additifs | Composition 1 (invention) | Composition 2R (comparaison) | Composition 3R (comparaison) |
|---|---|---|---|---|
| indice de jaune | —9,7 | —8 | +11,1 | —6,6 |

Ces résultats montrent que seule la composition selon l'invention (composition 1) permet de conserver une coloration pratiquement identique à sa coloration initiale; une composition ne contenant que le produit MBP 5 à titre d'antioxydant primaire phénolique (composition 2R) a jauni fortement à l'issue de l'étape de granulation; enfin, une composition ne contenant pas de polyester phénolique à titre d'antioxydant secondaire selon l'invention (composition 3R) ne parvient pas non plus à garder sa coloration initiale.

## Revendications

1. Compositions stabilisées à la dégradation oxydante à base de polymères d'alpha-oléfines contenant un antioxydant primaire phénolique appartenant au groupe des mono-, bis- et thiobisphénols alkylés, caractérisées en ce qu'elles comprennent en outre un antioxydant secondaire choisi parmi les polyesters phénoliques dérivés d'un acide carboxylique aliphatique ou aromatique polyfonctionnel et d'un polyphénol alkylé.

2. Compositions stabilisées selon la revendication 1, caractérisées en ce que l'antioxydant secondaire est choisi parmi les polyesters phénoliques dérivés d'un acide dicarboxylique aromatique et d'un bisphénol alkylé.

3. Compositions stabilisées selon la revendication 2, caractérisées en ce que l'antioxydant secondaire est le téréphtalate de 2,2'-méthylène-bis(4--méthyl-6-tert-butylphénol).

4. Compositions stabilisées selon l'une quelconque des revendications 1 à 3, caractérisées en ce qu'elles comprennent en outre un antioxydant tertiaire choisi parmi les thioesters et les phosphites organiques.

5. Compositions stabilisées selon la revendication 4, caractérisées en ce que l'antioxydant tertiaire est le tétrakis (3-thio dodécylpropionate) de pentaérythritol.

6. Compositions stabilisées selon l'une quelconque des revendications 1 à 5, caractérisées en ce qu'elles comprennent en outre un sel de calcium d'un acide aliphatique monocarboxylique saturé.

7. Compositions stabilisées selon la revendication 6, caractérisées en ce que le sel de calcium de l'acide aliphatique monocarboxylique saturé est le stéarate de calcium.

8. Compositions stabilisées selon l'une quelconque des revendications 1 à 7, caractérisées en ce que l'antioxydant primaire phénolique est un bisphénol.

9. Compositions stabilisées selon la revendication 8, caractérisées en ce que l'antioxydant primaire phénolique est le 2,2'-méthylène-bis(4-méthyl-6--tert-butylphénol).

10. Compositions stabilisées selon l'une quelconque des revendications 1 à 9, caractérisées en ce que le polymère d'alpha-oléfine est un polymère contenant au moins 90% molaires d'éthylène.

## Patentansprüche

1. Zusammensetzungen, stabilisiert gegen oxidierenden Abbau, auf Basis von Alpha-Olefinpolymeren, mit einem primären phenolischen Antioxydationsmittel, das zu der Gruppe der alkylierten Mono-, Bis- und Thiobisphenole gehört, dadurch gekennzeichnet, dass sie ausserdem ein sekundäres Antioxidationsmittel enthalten, das unter den phenolischen Polyestern ausgewählt wird, die von einer aliphatischen oder aromatischen polyfunktionellen Carbonsäure und einem alkylierten Polyphenol abstammen.

2. Stabilisierte Zusammensetzungen nach Anspruch 1, dadurch gekennzeichnet, dass das sekundäre Antioxydationsmittel ausgewählt wird unter den phenolischen Polyestern, die von einer aromatischen Dicarbonsäure und einem alkylierten Bisphenol abstammen.

3. Stabilisierte Zusammensetzungen nach Anspruch 2, dadurch gekennzeichnet, dass das sekundäre Antioxydationsmittel das Terephtalat von 2,2'--Methylen-bis(4-methyl-6-tert-butylphenol) ist.

4. Stabilisierte Zusammensetzungen nach irgendeinem der Ansprüche 1 bis 3, dadurch gekennzeichnet, dass sie ausserdem ein tertiäres Antioxydationsmittel enthalten, das unter den Thioestern und den organischen Phosphiten ausgewählt wird.

5. Stabilisierte Zusammensetzungen nach Anspruch 4, dadurch gekennzeichnet, dass das tertiäre Antioxidationsmittel das Tetrakis-(3-thiododecylpropionat) von Pentaerythrit ist.

6. Stabilisierte Zusammensetzungen nach irgendeinem der Ansprüche 1 bis 5, dadurch gekennzeichnet, dass sie ausserdem ein Kalziumsalz einer gesättigten aliphatischen Monocarbonsäure enthalten.

7. Stabilisierte Zusammensetzungen nach Anspruch 6, dadurch gekennzeichnet, dass das Kalziumsalz der gesättigten aliphatischen Monocarbonsäure Kalziumstearat ist.

8. Stabilisierte Zusammensetzungen nach irgendeinem der Ansprüche 1 bis 7, dadurch gekennzeichnet, dass das primäre phenolische Antioxydationsmittel ein Bisphenol ist.

9. Stabilisierte Zusammensetzungen nach Anspruch 8, dadurch gekennzeichnet, dass das primäre phenolische Antioxidationsmittel 2,2'-Methylen-bis-(4-methyl-6-tert-butylphenol) ist.

10. Stabilisierte Zusammensetzungen nach irgendeinem der Ansprüche 1 bis 9, dadurch gekennzeichnet, dass das Alpha-Olefinpolymer ein Polymer mit mindestens 90 Mol-% Ethylen ist.

**Claims**

1. Compositions which are stabilised against oxidative degradation and are based on alpha-olefine polymers containing a phenolic primary antioxidant and belonging to the group of the alkylated mono-, bis- and thiobisphenols, characterised in that they additionally comprise a secondary antioxidant chosen from among phenolic polyesters derived from a polyfunctional aliphatic or aromatic carboxylic acid and an alkylated polyphenol.

2. Stabilised compositions according to claim 1, characterised in that the secondary antioxidant is chosen from among the phenolic polyesters derived from an aromatic dicarboxylic acid and an alkylated bisphenol.

3. Stabilised compositions according to claim 2, characterised in that the secondary antioxidant is 2,2'-methylene-bis(4-methyl-6-tert.-butylphenol) terephthalate.

4. Stabilised compositions according to any one of claims 1 to 3, characterised in that they furthermore comprise a tertiary antioxidant chosen from among the thioesters and the organic phosphites.

5. Stabilised compositions according to claim 4, characterised in that the tertiary antioxidant is pentaerythritol tetrakis-(3-thio-dodecylpropionate).

6. Stabilised compositions according to any one of claims 1 to 5, characterised in that they furthermore comprise a calcium salt of a saturated monocarboxylic aliphatic acid.

7. Stabilised compositions according to claim 6, characterised in that the calcium salt of the saturated monocarboxylic aliphatic acid is calcium stearate.

8. Stabilised compositions according to any one of claims 1 to 7, characterised in that the phenolic primary antioxidant is a bisphenol.

9. Stabilised compositions according to claim 8, characterised in that the phenolic primary antioxidant is 2,2'-methylene-bis(4-methyl-6-tert.-butylphenol).

10. Stabilised compositions according to any one of claims 1 to 9, characterised in that the alpha-olefine polymer is a polymer containing at least 90 mole % of ethylene.